# EUROPEAN PATENT APPLICATION

(11) **EP 2 759 976 A1**
(43) Date of publication of application: **30.07.2014**
(21) Application number: 13160235.1
(22) Date of filing: 20.03.2013
(51) Int. Cl.: G06Q 30/06

(54) **A system and method for merchandising on an electronic device with instantaneous loan and insurance**

(30) Priority: 29.01.2013 IN MU02552013
(71) Applicant: Tata Consultancy Services Limited, 400021 Mumbay (IN)
(72) Inventor: N, Ganapathy Subramaniam, Bangalore 560066 Karnataka (IN); Shariff, Mohammed Yousuf, Bangalore 560066 Karnataka (IN); Garg, Shalin, Bangalore 560066 Karnataka (IN); Vallat, Sathish, Bangalore 560066 Karnataka (IN)
(74) Representative: Potter Clarkson LLP

(57) **Abstract**

A system and method to enable merchandising on an electronic device is disclosed. The system enables instantaneous loan for the purchase of a product and accordingly generate a customized insurance policy for the purchased product in a purchase lifecycle. The system analyzes financial transaction data of buyer's financial instruments and accordingly suggests the best mode of splitting the transaction amount of the product over the financial instruments owned by the buyer. The system further enable biometric authentication of the buyer on the electronic device before granting an instantaneous loan for the purchase of said product. The electronic device is further enabled with means to transmit digitally signed transaction documents to the buyer.

## Description

### FIELD OF THE INVENTION

The present invention relates to a field of financial transaction executed in a computer-based merchandising environment. More particularly, the invention relates to a method and system enabling electronic merchandising environment to facilitate instantaneous availability of insurance and loan for a product to authorized users by analyzing financial metadata associated with the users' financial instruments and allowing the user to split the transaction amount over a plurality of financial instruments.

### BACKGROUND OF THE INVENTION

Merchandising kiosk is one of the leading trends for selling goods and products which facilitate impulse buying of products. Such merchandising kiosks are available at metro stations, airports, shopping malls and other public places. These merchandising kiosks are provided with a means for online payment of products so purchased, however due to space constraints, very few products can be sold at these places. Online shopping websites such as Amazon^{™}, E-BAY^{™} and the like provide a large portfolio of products for online purchase. Buyers can purchase products online, make payment, and the purchased products are delivered to the buyer's shipping address.

However, it is difficult for any buyer to purchase the product without actually seeing the products. There are many intrusion attacks which are happening in online shopping due to unsecure online transactions. Adding to the same, there is no guaranty that the products would be delivered within the specified time. After receiving the products the buyer might feel cheated since the claimed product might not stand up to the expectations of the buyer. All these hesitations and security issues ultimately lead to dissatisfaction of customer and poor quality of service.

Retail sector over the globe has developed marginally with the development in IT- enabled financial sector. Multiple payment option such as credit card, debit card and net banking are available to the customers in order to make retail and online payments. Now-a-days, customers use multiple options of payment for a single transaction or a single purchase. Due to increase in the number of financial instruments owned by a single user, it becomes difficult to adequately utilize the added benefits associated with these financial instruments. Some of the users are unaware about the added benefits provided by their financial instruments.

Further, impulse buying is largely affected with the availability of funds in the user's financial instruments. Financial credit means such as credit cards and pre-approved loans do solve the problem of insufficiency of funds to an extent, but the existing credit system is restricted to strict deadlines of repayment and pre-approved loans which are not disbursed until the identity verification and financial background verification is performed. The existing online transaction system does not enable instantaneous insurance for the purchased products by means of straight through processing. Moreover, there are no means by which the buyer can customize his/her product insurance and repayment options during the purchase lifecycle. Some of the e-business sites do provide flexibility in splitting the transaction amount over a plurality of financial instruments such as credit card, debit card, gift card and through EMI in the purchase cycle itself. However, there is no system available which can analyze the financial transaction data associated with buyer's financial instruments and accordingly suggest an optimal way to split the transaction amount over the financial instruments.

Thus, the existing solutions in the known art lacks in providing automatic customization throughout the purchase lifecycle. This may result into unnecessary exploitation of credit resources such as credit card or instantaneous loans. Hence, there is a long-felt need to enable a system and method to provide instantaneous funds for impulse buying at any desired location. There is a need for a system to analyze a buyer's financial background and accordingly suggest an optimal way in which the transaction amount can split over different financial instruments in order to make economic significance to the user, and providing cross-selling opportunity such as loan and insurance for the banks.

### OBJECTS OF THE INVENTION

The primary object of the present invention is to enable a system and method for dynamically splitting a transaction amount in a transaction over a plurality of financial instruments.

Another object of the invention is to suggest an optimal way for splitting the transaction amount over the plurality of financial instruments.

Yet another object of the invention is to provide online insurance and instantaneous loan for the purchase of any product using straight through processing.

Still another object of the invention is to display maximum information associated with the product by means of 2D and 3D interface enabled at an electronic device.

### SUMMARY OF THE INVENTION:

Before the present systems and methods, enablement are described, it is to be understood that this application is not limited to the particular apparatus, systems, and methodologies described herein, as there can be multiple possible embodiments which are not expressly illustrated in the present disclosures. It is also to be understood that the terminology used in the description is for the purpose of describing the particular versions or embodiments only, and is not intended to limit the scope of the present application.

In one embodiment, the present invention discloses a system and method for dynamically splitting a transaction amount of a product purchased by means of an electronic device over a plurality of financial instruments by analyzing the metadata associated therewith the financial instruments. The metadata associated with the financial instruments of a user is analyzed to identify credit worthiness of the user to compute instantaneous loan and insurance amount for the purchased products facilitated by means of straight through processing.

In one embodiment, a repository is maintained to store biometric authentication information of the user and metadata associated with said financial instruments. After the user is identified at the electronic device, the electronic device displays a virtual product catalogue on the user interface. The virtual product catalogue displays additional information such as a suitable insurance for each product, available loans and EMI options. In an embodiment, any new user is granted the rights to only access the product catalogue displayed on the electronic device. However, the transaction may only be initiated when the authorized users are identified and authenticated by the electronic device. Once the user decides to purchase a product, the user is authenticated by means of a biometric signature followed by transmission of information associated with this product such as total transaction amount and insurance costs to an intermediate interfacing server.

In one embodiment, the intermediate interfacing server analyzes the financial metadata associated with the user's financial instruments and accordingly suggests an instantaneous loan relative to said transaction amount based on the credit worthiness associated with the user. The intermediate interfacing server further suggests best mode of splitting the transaction amount over a plurality of financial instruments including instantaneous loan as one of the financial instrument by analyzing said financial metadata associated with the user's financial instruments. Once the user selects the insurance and loan and he/she wishes to avail for purchase of the said products, a plurality of digitally signed transaction documents are generated by the intermediate interfacing server which are accordingly transmitted to the user.

### BRIEF DESCRIPTION OF DRAWINGS

The foregoing summary, as well as the following detailed description of embodiments, is better understood when read in conjunction with the appended drawings. For the purpose of illustrating the invention, there is shown in the present document example constructions of the invention; however, the invention is not limited to the specific methods and apparatus disclosed in the document and the drawings:
Figure 1 is a system diagram illustrating the various modules configured for product merchandising on an electronic device.
Figure 2 is a flow diagram illustrating the sequential execution steps followed in the process of product merchandising.
Figure 3 is a flow diagram illustrating the identification and authentication process of a user at the electronic device.
Figure 4 is a flow diagram illustrating the process of selection and download of favorite products from the product catalog displayed on the electronic device.
Figure 5 is a flow diagram illustrating the process of customizing insurance policy for the product to be purchased.
Figure 6 is a flow diagram illustrating the process of splitting the transaction amount over the plurality of financial instruments.
Figure 7 is a flow diagram illustrating the process of generating and transferring a plurality of digitally signed transaction documents to the user.

### DETAILED DESCRIPTION

The description has been presented with reference to an exemplary embodiment of the invention. Persons skilled in the art and technology to which this invention pertains will appreciate that alterations and changes in the described method and system of operation can be practiced without meaningfully departing from the principle spirit and scope of this invention.

According to one embodiment of the present invention, a system and method for dynamically splitting a transaction amount over a plurality of financial instruments is disclosed. The most favorable way of splitting transaction amount over the financial instruments is computed by analyzing a metadata stored in the repository associated with a user's financial instruments. The optimal way in which the transaction amount should be subdivided over the financial instruments is computed by analyzing the metadata and is accordingly suggested to the user.

In one embodiment, said repository stores details of the products available for purchase at the kiosk. Further the repository maintains the records of the merchants providing the products and their financial instrument details thereof. Biometric authentication credentials, financial metadata, financial instruments information associated with a plurality of user are also maintained in the repository. The system further comprises of an electronic device enabled with identification and biometric authentication means for identifying and authenticating a user accessing the electronic device. Once the user is identified a virtual product catalogue along with a suitable insurance for each product which is available for purchase at the kiosk is displayed on user interface (UI) of the electronic device. The electronic device further authenticates the user using a biometric signature of the user hence making the transactions paperless. The electronic device is further provided with an information transmission module for transmitting the purchase details of the product and insurance thereof purchased by the user from the virtual product catalogue to an intermediate interfacing server.

In one embodiment, the intermediate interfacing server coupled to the electronic device is enabled to facilitate a plurality of payment options. These payment options includes but not limited to credit card account, a debit card account, an NFC account, an electronic funds transfer, an automated clearing house (ACH), remote check deposit, smart card or gift card, QR Payments or funds gathered through a purchase wish list published on a social media. Further the system provides other transaction means in the form of instantaneous loan with the customizable EMI amount and re-payment tenure relative to said transaction amount by analyzing the financial metadata such as credit limits, account balance, salary cycle historical transaction data associated with a user's financial instruments. The loan account is created at the intermediate interfacing server, the repayment schedules are calculated and the loan is immediately disbursed and dispatched to the merchant instantaneously. The amount of instantaneous loan is computed based upon a customer's credit worthiness computed by the intermediate interfacing server.

In one embodiment, the intermediate interfacing server further automates the process of splitting the transaction amount which is payable across one or more financial instruments including the instantaneous loan by further analyzing the financial metadata associated with the financial instruments. The intermediate interfacing server is coupled to a payment gateway for retrieving the transaction amount into the merchants account. A plurality of digitally signed transaction documents are generated for the purchased product and the insurance therefor by the intermediate interfacing server which are then transmitted to the user.

Customer may choose a set of products as portable favorites and transfer them to his/her hand held device, or share them on social network. Portable favorites which are transferred from the kiosk to the customer's device can be synchronized with other devices owned by the customer when accessed from any automated self-service checkout terminal. A single invoice containing product purchase details, the details of loan account with its associated EMI payment schedules and amount, the insurance policy premium and next due date etc is generated and displayed.

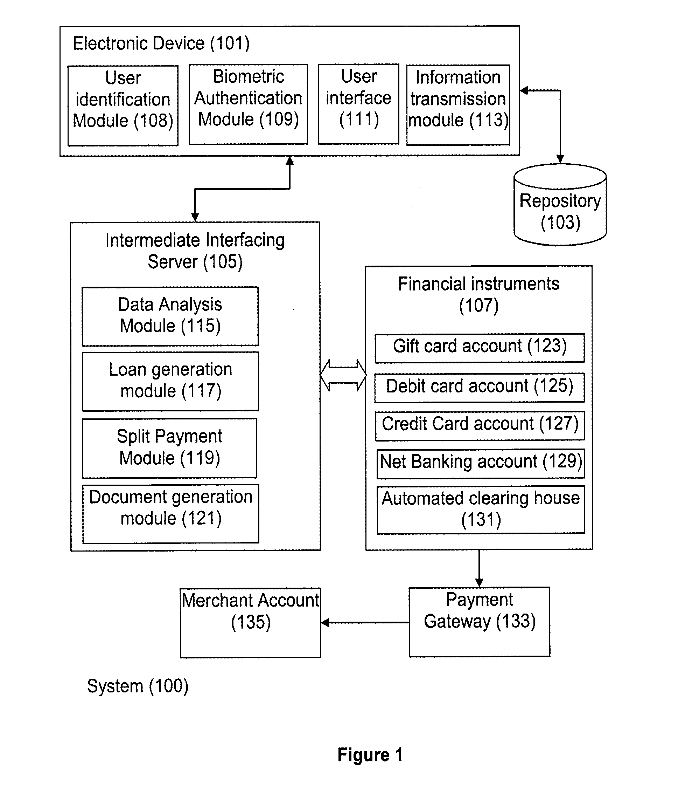

Referring to figure 1 is an architecture diagram of a system (100) illustrating different modules and units involved in the process of purchasing a product. The system (100) comprises of an electronic device (101), a repository (103), and an intermediate interfacing server (105), a plurality of financial instruments (107) hereinafter referred as "financial instruments", a payment gateway (133) and merchant account (135). The electronic device (101) further comprises of a user identification Module (108), a biometric authentication module (109), a user interface (111) and an information transmission module (113). The electronic device (101) is further electronically coupled with the repository (103) storing merchandising information and the intermediate interfacing server (105). The intermediate interfacing server (105) comprises of a data analysis module (115), a loan generation module (117), a split payment module (119) and a document generation module (121). The split payment module (119) at the intermediate interfacing server (105) is further coupled with the financial instruments (107) including a gift card account (123), a debit card account (125), a credit card account (127), a net banking account (129) and an automated clearing house (131). The financial instruments (107) are linked with a merchant account (135) through a payment gateway (133) which further includes payment means known in the art such as RTGS, NEFT, Structured Financial Messaging System (SFMS), and Society for World-wide Interbank Financial Telecommunications (SWIFT).

In one embodiment of the present invention, the electronic device (101) can be selected from a group comprising of a tablet, a smart phone, a kiosk device, a dedicated point of sale system or any other electronic device which is enabled with a User Identification Module (108) such as, RFID/NFC card reader or magnetic tape reader, registered email id, cellphone number, internet login id, wireless mobile pairing and a biometric authentication module (109) such as a voice biometric, a fingerprint biometric, an eye retina scan, face recognition, Palm Vein, iris biometric, hand geometry, handwritten signature or combinations thereof. The electronic device (101) is further enabled with a user interface (111) capable of displaying three dimensional (3D) or two dimensional (2D) visualization data and an information transmission module (113) enabled to transfer digital information to a user by means of an e-mail, a Bluetooth, a Wi-Fi, a resonance (vibrations or sound), an optical communication, QR code, NFC/RFID or combinations thereof.

In one embodiment of the present invention, the user identification module (108) in the electronic device (101) which recognizes the user using a smart card, RFID card or a magnetic strip card issued by the bank. Further, the identified user is authenticated by means of biometric authentication module (109). The biometric authentication module (109) accepts at least one biometric sample and accordingly authenticates the user by accessing the biometric authentication information stored in the repository (103). Once the user is identified, a plurality of virtual product catalogues in 2D or 3D is displayed on the user interface (111). Each of the virtual product catalogues displays more than one product available for purchase. The user can select more than one product for purchase from different product catalogues and accordingly add these products to his/her cart.

In one embodiment of the present invention, after authentication using a biometric signature the user proceeds to make payment for the products in their cart. The biometric authentication is done before making payment so as to confirm the identity of the user identified by the device. The purchase details of the product in the cart such as the user financial instrument details, user's address, shipping details, contact details, insurance details, social network details, purchase preferences, wish lists or combinations thereof are extracted from the repository (103). Further a transaction amount is computed for the cart. This transaction amount includes cost of the product, an insurance cost, a warranty cost, a shipping cost, a tax amount, a wish list amount or combinations thereof. This information is transmitted to the intermediate interfacing server (105). The data analysis module (115) from the intermediate interfacing server (105) analyzes the metadata associated with the financial instruments (107) of the user, wherein the metadata includes bank statements, loan account history, bank account history, credit history, interest rates, repayment period and social metadata associated with the user.

In one embodiment of the present invention, the user is facilitated with the option to avail an instantaneous loan by the loan generation module (117). The loan generation module (117) in combination with the data analysis module (115) computes a maximum credit worthiness that the user pertains with respect to the transaction amount. Based on the credit worthiness of the user an instantaneous loan is facilitated by the loan generation module (117) for the repayment of the transaction amount. Further, the intermediate interfacing server (105) facilitates splitting of payment across the financial instruments (107) by means of the split payment module (119). The data analysis module (115) and loan generation module (117) in combination with split payment module (119) suggest the user, the best mode in which the transaction amount can be splitted over the financial instruments (107) in order to avail the maximum benefit of the facilities associated with each of the financial instruments (107).

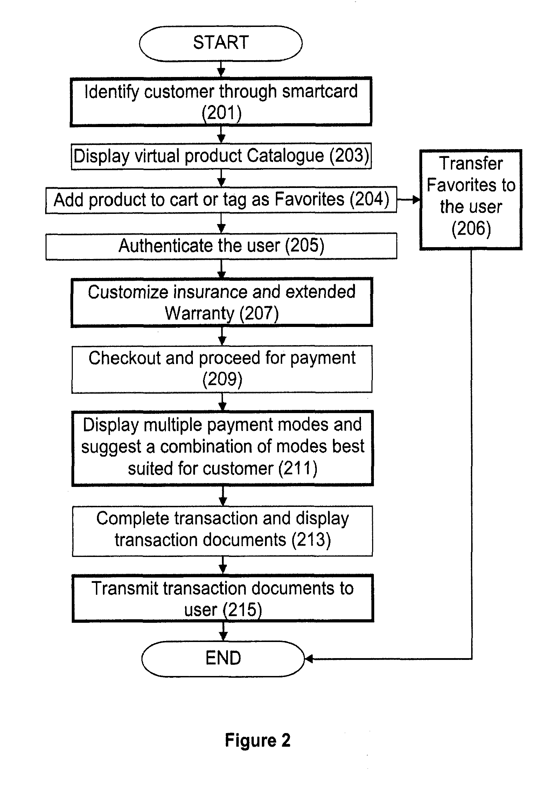

In one embodiment of the present invention, once the user confirms the preferred way of splitting the transaction amount which includes cost of the product, insurance cost, warranty cost, shipping cost, taxes and wish list amount, the payment gateway (133) retrieves each and every part of the transaction amount from the financial instruments (107) associated with the user and transfers it into the merchant account (135). The process of splitting the transaction amount over a plurality of financial instruments (107) is further elaborated in figures 2-7.

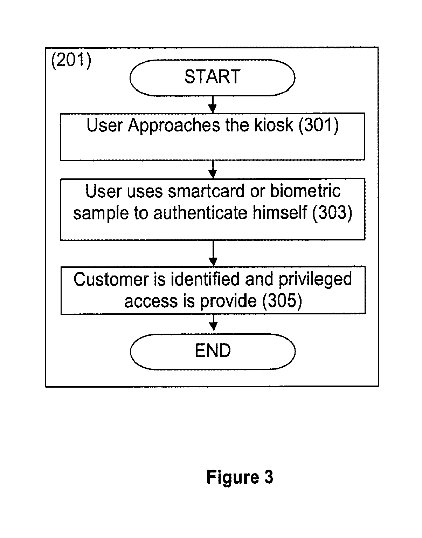

Referring to figure 2 is a flow diagram illustrating the sequential execution steps followed in the process of product merchandising and split payment. The process of product merchandising starts at step (201) by identifying the user operating the electronic device (101) using a smart card, voice command or other biometric authentication means. Once the user is identified, a virtual product catalogue is displayed on the user interface (111) of the electronic device (101) at step (203). The user can select one or more products as favorites and add them into the cart and proceed for purchase at step (204). At step (205), the user is authenticated using biometric authentication means. At step (206), the user can transfer a plurality of product catalogues selected as favorites to his/her personal communication device using a data transmission means and terminate the transaction. If the user prefers to purchase the products instantaneously, the electronic device (101) facilitates customization options such as customize insurance and extended warranty at step (207) for the purchase of the selected product. After customization, the user proceeds to payment and checkout at step (209). At step (211), multiple payment modes are displayed on the user interface (111). The electronic device suggests a combination of modes best suited for the customer for splitting the transaction amount over the financial instruments (107). Once the user accepts to split of the transaction amount as specified by the electronic device at step (213), a plurality of transaction documents are generated by the document generation module (121) and accordingly transferred to the communication device of the user at step (215). The steps for product merchandizing as specified in figure 2 are further elaborated in figures 3 to 7.

Referring figure 3 is a flow diagram illustrating the identification process (201) of a user at the electronic device (101). The process of identifying a user starts at step (301) wherein the user approaches the electronic device (101) and enters his identification credentials at step (303) which is in the form of a username or smartcard. At step (305), the user is identified by referring to the identification credentials stored in the repository (103) and privileged access is provided to the user in order to access the products available for purchase. A virtual product catalogue summing the available products for purchase is displayed on the user interface (111) of the electronic device (101). In an embodiment, any new user visiting the electronic device (101) is granted the rights to only view the product catalogue which is displayed on the electronic device (101). However, the transaction can be initiated only when the authorized users are identified and authenticated by the electronic device (101).

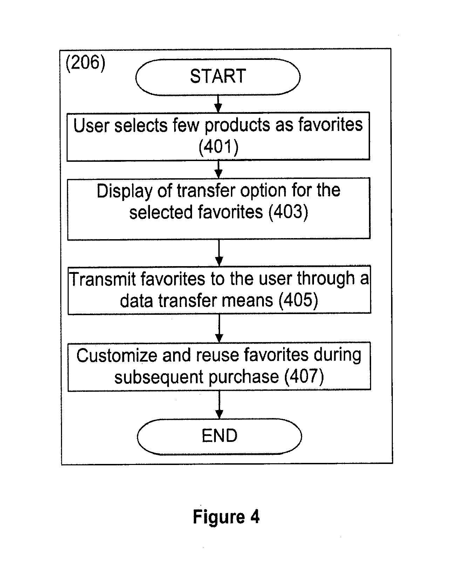

Referring to figure 4 is a flow diagram illustrating the process of selecting and downloading of favorite products (206) from the product catalog displayed on the electronic device (101). At step (401), the user selects few products of his/her choice as favorites from the virtual product catalogue. The electronic device (101) displays multiple transfer options such as e-mail, Bluetooth, Wi-Fi, resonance (vibrations or sound), optical communication, QR code for transferring the products selected in the favorites to the users at step (403). At step (405), the selected favorites are transferred to the user using at least one of the selected data transfer means. Once the favorites are downloaded they can be customized as per the requirement of the user and accordingly transferred back to the electronic device during subsequent purchase at step (407).

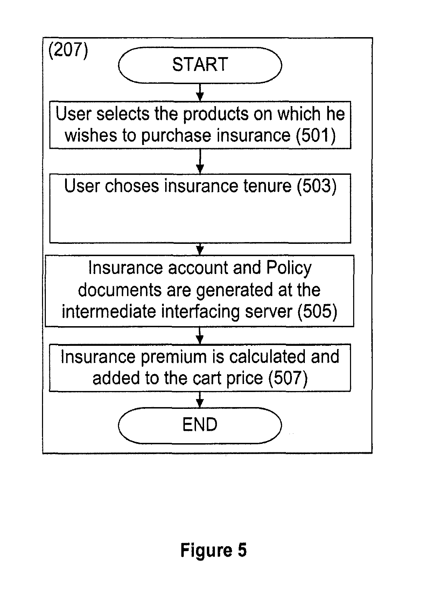

Referring to figure 5 is a flow diagram illustrating the process of customizing insurance policy (207) for the product to be purchased after the biometric authentication of the user at step (205). The process of selecting insurance starts at step (501) with the selection of the product for which the user wishes to purchase insurance. At step (503), the user selects the insurance policy for the purchased product and customizes it based upon the factors such as policy duration, policy type, EMI amount insurance tenure and the like. At step (505), the insurance account and policy documents are generated at the intermediate interfacing server (105). The premium is calculated and added to the cart price at step (507).

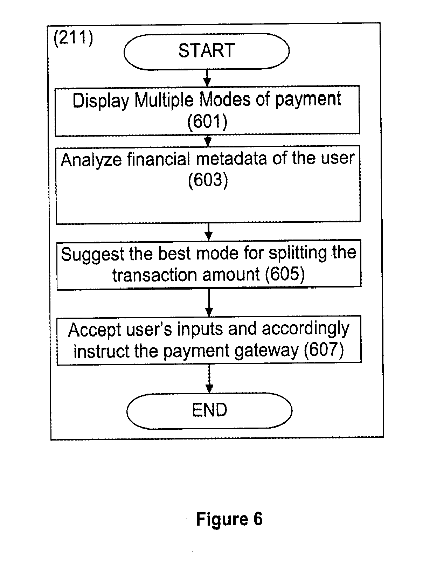

Referring to figure 6 is a flow diagram illustrating the process of splitting the transaction amount (211) over the financial instruments (107). At step (601), a plurality of payment modes such as a credit card account (127), a debit card account (125), an NFC account, an electronic funds transfer, ACH, remote check deposit, smart card or gift card, QR Payments or funds gathered through a purchase wish list which is displayed on the user interface (111) of the electronic device (101). At step (603), the financial metadata associated with the user's financial instruments (107) such as the historical transactions including bank statements, loan account history, debit account history, credit history, interest rates, repayment period, social metadata and other financial liabilities of the user are analyzed at the intermediate interfacing server (105). Based on the analysis performed by the intermediate interfacing server (105), it suggests the best mode of splitting the transaction amount across the financial instruments (107) at step (605). The user input is accepted at step (607) and accordingly instructions are passed to the payment gateway (133) to carry out the financial transaction. This step is followed by the generation of transaction documents for the financial transaction by the intermediate interfacing server (105).

In one embodiment of the present invention, the electronic device (101) is enabled to locally generate a wish list at a device-wise, a branch-wise, and bank-wise whereby other users can contribute to the wish list in the form of a charity. Further, the wish list can be posted onto a social media platform and accordingly the associated members can be invited in order to contribute their share. The wish list of a particular user may be visible to other users as a product in the catalog on the electronic device (101). When the user purchases this as a product, the item is gifted to the person who he/she has wished for it.

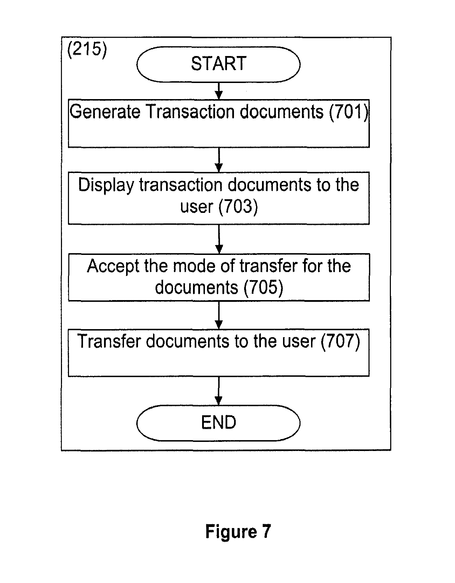

Figure 7 is a flow diagram illustrating the process of generating and transferring a plurality of digitally signed transaction documents (215) to the user. The transaction documents including a loan agreement, an insurance policy document, warranty certificate, invoice, bill, transaction details that are generated at step (701). These documents are displayed to the user on the user interface (111) at step (703) for verification purpose. The data transfer means for transferring the transaction documents are displayed to the user in order to allow the user to select one of the displayed said data transfer means. The data transfer means or mode which the user selects for transferring the transaction documents are accepted at step (705). At step (707) the transaction documents are transferred to the user.

Although the invention has been described in terms of specific embodiments and applications, persons skilled in the art can, in light of this teaching, generate additional embodiments without exceeding the scope or departing from the spirit of the invention described herein.

### WORKING EXAMPLE

In an exemplary embodiment of the present invention, a multi-touch electronic device such as tablet PC is mounted at a kiosk for selling toys in a shopping mall. The electronic device is enabled with audio authentication means such as mic for authenticating the user's intending to access the electronic device. Further, the electronic device is electronically coupled to a repository (103) for storing merchandising information associated with plurality of products available at the kiosk. Also, the biometric authentication credentials of registered users and metadata associated with the financial instruments (107) of the user in the repository (103). The electronic device is further coupled with an intermediate interfacing server (105) which is further coupled to the payment gateway (133) and is enabled to execute the financial transactions.

In an exemplary embodiment of the present invention, a user enters his/her authentication/identification credentials using the touch screen interface and accordingly authenticates him using biometric voice sample. Once the user is authenticated, a virtual product catalogue is configured for displaying the available toys and all the associated features on the touch screen enabled display of the kiosk. The user can select one or more products as favorites and transfer them to a personal mobile device. The virtual product catalogue is an editable file which can be used to customized products as per the requirement of the user. Alternately the user can generate a wish list of the product which he/she wishes to purchase and accordingly publish it on social networking sites.

In an exemplary embodiment of the present invention, the user selects one or more toys for purchase and proceeds for the payment. The intermediate interfacing server dynamically analyzes the metadata associated with the user's financial instruments (107) and accordingly determines the credit worthiness of the user. The user is provided the option to avail an instantaneous loan which is derived on the basis of the credit worthiness of that particular user. The user is also facilitated with options to buy an insurance policy for the toys he wants to purchase.

In an exemplary embodiment of the present invention, the metadata associated with the financial instruments (107) is analyzed and accordingly the best mode of splitting the transaction amount over the financial instruments (107) is suggested. This analysis includes determining the various offerings and benefits such as cash-back and other facilities which are associated with the financial instruments (107). Based upon the analysis, the best mode of splitting the transaction amount is displayed on the electronic device. Once the user selects the mode in which he/she wishes to split the transaction amount, the intermediate interfacing server deducts the transaction amount from the financial instruments (107) using the payment gateway (133) and accordingly transfers the transaction amount into the merchant account (135) in bits and pieces.

### ADVANTAGES OF THE INVENTION

The present invention has following advantages:
- The present invention enables a system for providing instantaneous loan and insurance for the purchase of a product.
- The present invention enables analysis of financial metadata and to accordingly suggest the best possible split payment option.
- The present invention enables 2D or 3D visualization of the products available at a store using an electronic device.
- The present invention enables biometric authentication at a kiosk for secure and paperless transaction of the purchase of the products.
- The present invention enables transfer of product catalogue selected as favorites to a personal communication device and reuses them for the next transaction.

## Claims

1. A method for dynamically splitting a transaction amount across a plurality of financial instruments for a product purchase through an electronic device, **characterized by** analyzing a metadata of said financial instruments stored in a repository, the method comprising steps of:
identifying a user accessing said electronic device using an identification means;
displaying a virtual product catalogue along with a suitable insurance for each product to be purchased on a user interface of said electronic device;
authenticating the identified user using a biometric authentication means;
transmitting said transaction amount and an associated purchase detail of the product and the suitable insurance thereof purchased by the authenticated user from the virtual product catalogue to an intermediate interfacing server for further processing;
facilitating an instantaneous pre-approved loan amount relative to the transaction amount based on a credit worthiness of the authenticated user, wherein the credit worthiness is further determined through said metadata;
splitting said transaction amount to be payable across one or more financial instruments, optionally including said pre-approved instantaneous loan by analyzing said metadata; and
generating a plurality of digitally signed transaction documents for the purchased product and the suitable insurance thereof.

2. The method of claim 1, wherein said transaction amount can be selected from a group comprising of a product cost, an insurance cost, a warranty cost, a shipping cost, taxes, wish list amount and combinations thereof.

3. The method of claim 1, wherein said purchase details can be selected from a group comprising of a user financial instrument details, user's address, shipping details, contact details, insurance details, social network details, purchase preferences, wish lists and combinations thereof.

4. The method of claim 1, wherein the financial instruments can be selected from a group comprising of a credit card account, a debit card account, an NFC account, an electronic funds transfer, an automated clearing house (ACH), remote check deposit, smart card or gift card, QR Payments or funds gathered through a purchase wish list stored on social media platforms or displayed on said electronic device and combinations thereof.

5. The method of claim 1, wherein said metadata can be selected from a group comprising of bank statements, loan account history, bank account history, credit history, interest rates, repayment period, a social metadata and combinations thereof.

6. The method of claim 1, wherein the identification means can be selected form a group comprising of RFID card reader, magnetic tape reader, registered email id, cellphone number, internet login id, wireless mobile pairing and combinations thereof.

7. The method of claim 1, wherein the biometric authentication means can be selected from a group comprising of a voice biometric, a fingerprint biometric, an eye retina scan, face recognition, Palm Vein, iris biometric, hand geometry, handwritten signature and combinations thereof.

8. The method of claim 1, wherein the user interface (UI) of the electronic device enables three dimensional (3D) or two dimensional (2D) visualization of each of the products in the catalogue.

9. The method of claim 1, further comprising step of retrieving each part of the split transaction amount into the payable account by means of online payment gateway such as RTGS, NEFT, Structured Financial Messaging System (SFMS), Society for World-wide Interbank Financial Telecommunications (SWIFT) into the payable account.

10. The method of claim 1, wherein the digitally signed transaction documents can be selected from a group comprising of a loan agreement, an insurance policy document, warranty certificate, invoice, bill, transaction details and combinations thereof.

11. The method of claim 1, further comprising the step of transmitting the generated digitally signed transaction documents to the mobile device of the user by means of at least one communication module selected from a group comprising of an e-mail, Bluetooth, Wi-Fi, resonance(vibrations or sound), optical communication, QR code and combinations thereof.

12. The method of claim 1, further comprising the step of downloading at least one product details from the displayed virtual catalogue on a mobile device of the user in the form of at least one portable favorite.

13. The method of claim 12, wherein said portable favorite can be customized as per the user requirements and uploaded back to the electronic devices for enabling customized product purchase through the electronic device.

14. A system for dynamically splitting a transaction amount across a plurality of financial instruments for a product purchase through an electronic device, **characterized by** analyzing a metadata of said financial instruments stored in a repository, the system comprising:
the repository storing merchandising information associated with plurality of products, biometric authentication credentials of said user and said metadata;
an electronic device coupled to a mobile device of the user through communication means, the electronic device further comprising:
a user identification module for identifying said user accessing the electronic device;
a biometric authentication module for authenticating the user accessing the electronic device;
a user interface (UI) module for displaying a virtual product catalogue along with a suitable insurance for each product to be purchased at the electronic device;
an information transmission module for transmitting at least one transaction amount and an associated purchase detail of the product and the suitable insurance thereof purchased by the authenticated user from the virtual product catalogue to an intermediate interfacing server;
said intermediate interfacing server coupled to said electronic device, further comprising:
a loan generation module for facilitating an instantaneous pre-approved loan relative to said transaction amount based on the credit worthiness associated with the authenticated user;
an automated split payment module for splitting said transaction amount to be payable across one or more financial instruments optionally including said pre-approved instantaneous loan by analyzing said metadata; and
a document generation module for generating a plurality of digitally signed transaction documents for the products and insurance to be purchased.

15. The system of claim 14, wherein said merchandising information includes product details and merchant account details selling said products.
